**Europäisches Patentamt**

**European Patent Office**

**Office européen des brevets**

(19)

(11) Veröffentlichungsnummer : **0 121 666**
**B1**

(12) # EUROPÄISCHE PATENTSCHRIFT

(45) Veröffentlichungstag der Patentschrift :
22.10.86

(51) Int. Cl.⁴ : **H 04 B 17/02**

(21) Anmeldenummer : **84100990.5**

(22) Anmeldetag : **01.02.84**

(54) **Verfahren und Vorrichtung zur Ueberwachung von Zwischenverstärkern.**

(30) Priorität : **15.03.83 CH 1405/83**

(43) Veröffentlichungstag der Anmeldung :
**17.10.84 Patentblatt 84/42**

(45) Bekanntmachung des Hinweises auf die Patenterteilung : **22.10.86 Patentblatt 86/43**

(84) Benannte Vertragsstaaten :
**AT CH DE FR GB IT LI NL SE**

(56) Entgegenhaltungen :
**EP-A- 0 054 643**
**DE-A- 2 558 374**
**DE-A- 2 740 620**
**GB-A- 2 063 029**
**US-A- 3 987 395**
**US-A- 4 007 458**

(73) Patentinhaber : **BBC Aktiengesellschaft Brown, Boveri & Cie.**
**Haselstrasse**
**CH-5401 Baden (CH)**

(72) Erfinder : **Oehrli, Urs A.**
**Marchwartstrasse 29**
**CH-8038 Zürich (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Ueberwachung von Zwischenverstärkern, welche zum Ausgleich der Dämpfungsverluste längs einer Signalleitung zwischen zwei Kopfstationen angeordnet sind, gemäss dem Oberbegriff des Anspruchs 1, sowie Vorrichtungen zur Durchführung des Verfahrens.

Bei der Uebertragung von Signalen zwischen zwei Kopfstationen mittels einer Signalleitung treten im Allgemeinen Dämpfungsverluste auf, die sich nicht nur bei sehr grossen Leitungslängen bemerkbar machen, sondern bei bestimmten Uebertragungsverfahren auch bei vergleichsweise kleinen Entfernungen auftreten. Dies ist beispielsweise beim Tunnelfunk der Fall, wo in einem Strassen-, Bahn- oder U-Bahn-Tunnel als Signalleitung strahlende Koaxialkabel verwendet werden, die wegen ihrer durchbrochenen Abschirmung als Antennen wirken und eine drahtlose Verbindung zwischen den Kopfstationen und einer mobilen Empfangsstation im Tunnel ermöglichen.

Die Abstrahlungsverluste sind selbst bei Entfernungen zwischen den Kopfstationen von nur wenigen Kilometern so hoch, dass längs der Signalleitung eine Mehrzahl von meist breitbandigen Zwischenverstärkern angeordnet werden müssen, welche die im wesentlichen durch die Abstrahlung bedingten Dämpfungsverluste ausgleichen. Da die Zwischenverstärker in den meisten Fällen nur schwer zugänglich über die gesamte Uebertragungsstrecke verteilt sind, wird der Betriebszustand der einzelnen Zwischenverstärker mittels einer zentralen Ueberwachungseinheit fortlaufend überwacht, und eventuelle Störfälle werden in den einzelnen Zwischenverstärkern gemeldet, so dass der defekte Teil der Anlage schnell und einfach erkannt und gezielt repariert werden kann. Ein solches Ueberwachungssystem ist aus der Druckschrift Bull. SEV/VSE 73 (1982) 13, 3. Juli, S. 649 ff. bekannt und wird dort am Beispiel der Tunnelfunkanlage des Gotthard-Strassentunnels beschrieben. Der Betriebszustand eines Zwischenverstärkers ist durch eine bestimmte Anzahl von Ueberwachungskriterien charakterisiert, die über eine Fernwirkanlage von Fernwirkanlage-Unterstellen zu einer Fernwirkanlage-Zentralstelle weitergeleitet werden.

Die für dieses Verfahren benötigte Fernwirkanlage verursacht bei einer Neuinstallation hohe Investitionskosten. Der Aufwand ist daher nur tragbar, wenn eine bereits vorhandene Fernwirkanlage benutzt werden kann. Dies ist jedoch höchstens in grossen Strassentunnels, keinesfalls jedoch in Bahntunnels der Fall. Auch stehen meistens keine zusätzlichen Leitungen für die Ueberwachung zur Verfügung und müssen für diesen Zweck erst verlegt werden.

Aufgabe der vorliegenden Erfindung ist es daher, ein Verfahren zur Ueberwachung von Zwischenverstärkern zu schaffen, bei dem keine zusätzlichen Leitungen zu bzw. von den Zwischenverstärkern erforderlich sind.

Die Aufgabe wird bei dem eingangs genannten Verfahren durch die Merkmale aus dem Kennzeichen des Anspruchs 1 gelöst. Da der Ueberwachungszyklus für die Zwischenverstärker durch eine Aenderung der Speisespannung eingeleitet wird und die Antwortsignale durch Aenderungen im Speisestrom übertragen werden, erfolgt der Austausch der Signale zwischen der Ueberwachungseinheit und den überwachten Zwischenverstärkern ausschliesslich über die Speiseleitung, die zur Versorgung der Zwischenverstärker benötigt wird und daher in allen Fällen bereits vorhanden ist.

Das erfindungsgemässe Verfahren hat den Vorteil, dass keine zusätzlichen Ueberwachungsleitungen bei der Planung einer neuen Uebertragungsstrecke berücksichtigt werden müssen und dass eine Ueberwachungseinrichtung bei bestehenden Anlagen ohne grossen Aufwand nachgerüstet werden kann.

Besonders günstig ist es, zur Einleitung des Ueberwachungszyklus die Speisespannung kurzzeitig abzusenken und die Antwortsignale mittels impulsförmiger Stromerhöhungen an die Ueberwachungseinheit zu übertragen, wobei die Antwortsignale jeweils eine Folge von Informationsbits enthalten. Dadurch wird einerseits ein guter Störabstand erreicht und andererseits die Funktion der Signalübertragung nicht beeinträchtigt.

Eine weitere Vereinfachung im Aufbau ergibt sich, wenn zugleich als Speiseleitung und Signalleitung eine gemeinsame Koaxialleitung verwendet wird und die Versorgung der Zwischenverstärker dementsprechend über eine Wechselstromspeisung erfolgt und wenn sowohl die Absenkung der Speisespannung zu Beginn des Ueberwachungszyklus, als auch die impulsförmigen Stromerhöhungen der Antwortsignale in Nulldurchgängen der Speisewechselspannung geschaltet werden. Neben einer weiteren Reduktion des Leitungsaufwandes folgt aus der Schaltung in den Nulldurchgängen auch eine Verringerung des Oberwellengehaltes und damit eine Verringerung der Störungen durch den Ueberwachungsvorgang.

In einem bevorzugten Ausführungsbeispiel des erfindungsgemässen Verfahrens werden die Stromerhöhungen in den Zwischenverstärkern durch das Parallelschalten eines Lastwiderstandes in der Speisung erzeugt. Zur Auswertung der Stromimpulse in der Ueberwachungseinheit werden der Speisewechselstrom durch einen Messwiderstand geschickt, die am Messwiderstand abfallende Spannung gleichgerichtet und gemittelt und die Aenderungen des Mittelwertes detektiert und ausgewertet.

Weiterhin ist es vorteilhaft, eine gegenseitige Ueberschneidung der Antwortsignale von den verschiedenen Zwischenverstärkern dadurch zu vermeiden, dass der Ueberwachungszyklus eine der Anzahl der Zwischenverstärker entsprechende Anzahl von Zeitschlitzen aufweist, jedem Zwischenverstärker wenigstens ein Zeitschlitz zugeordnet ist und die Antwortsignale der Zwischenverstärker in den zugehörigen Zeitschlitzen übertragen werden.

Die Erfindung sowie weitere Ausführungsbeispiele und Vorrichtungen zur Durchführung des Verfahrens sollen nachfolgend anhand der Zeichnung beschrieben und näher erläutert werden. Es zeigen :

Figur 1 das Blockschaltbild einer Uebertragungsstrecke mit Zwischenverstärkung nach dem Stand der Technik ;

Figur 2 die Blockschaltbilder einer Kopfstation und eines ausgewählten Zwischenverstärkers zur Durchführung des erfindungsgemässen Verfahrens ;

Figur 3 die entsprechenden Blockschaltbilder für eine Anlage mit kombinierter Signal- und Speiseleitung ;

Figur 4 die prinzipielle Schaltung zur Realisierung impulsartiger Stromerhöhungen für die Antwortsignale aus den Zwischenverstärkern ;

Figur 5 die zeitliche Zuordnung der verschiedenen Signale in einem Ueberwachungszyklus ;

Figur 6 den Aufbau eines Antwortsignaldetektors und eines sendeseitigen Kopplers gemäss Fig. 3 ;

Figur 7 den Aufbau eines Kopplers im Zwischenverstärker gemäss Fig. 3.

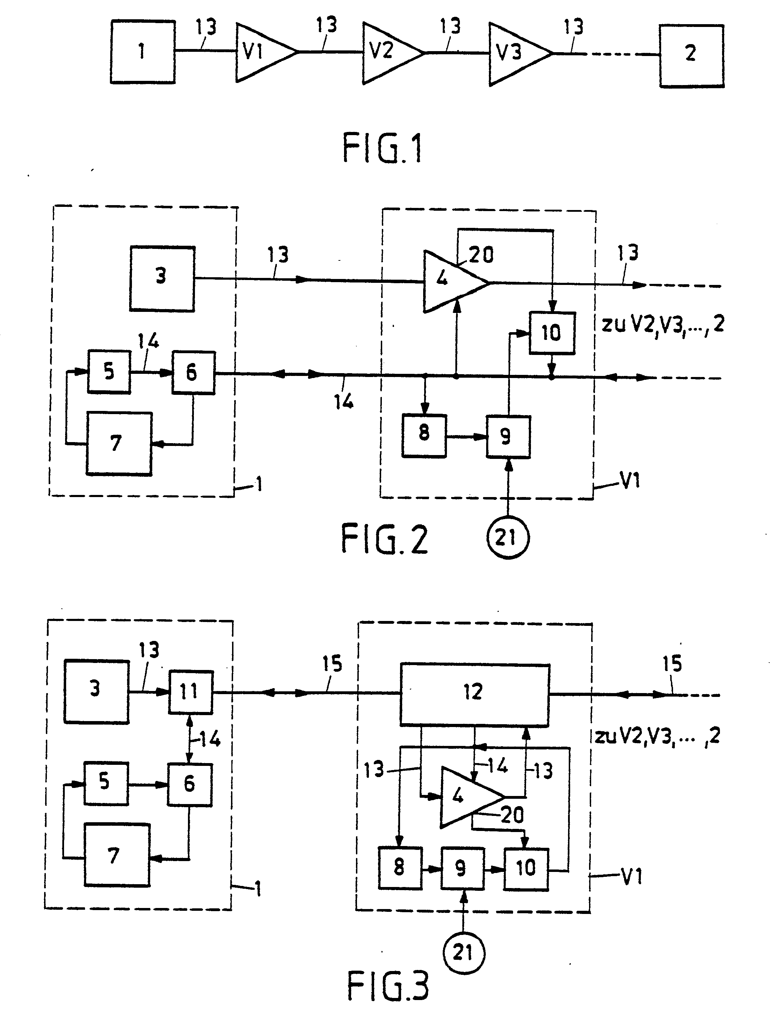

In Fig. 1 ist das stark vereinfachte Blockschaltbild einer Uebertragungsstrecke mit Zwischenverstärkung nach dem Stand der Technik dargestellt. Zwischen zwei Kopfstationen 1 und 2, von denen die eine beispielsweise einen Sender, die andere einen entsprechenden Empfänger enthält, verläuft eine Signalleitung 13, über die drahtgebundene Signale oder Nachrichten von der sendenden Kopfstation 1 zur empfangenden Kopfstation 2 übertragen werden. Zum Ausgleich der auftretenden Dämpfungsverluste sind in die Signalleitung 13 in annähernd gleichen Abständen Zwischenverstärker V1, V2, V3, ... eingefügt, die jeweils das geschwächte ankommende Signal detektieren und verstärkt weitergeben, wobei gegebenenfalls deformierte Signale durch eine zusätzliche Impulsformung regeneriert werden können.

Der Ausfall eines oder mehrerer Zwischenverstärker macht sich in der empfangenden Kopfstation 2 durch das Ausbleiben übertragener Signale oder eine fehlerhafte Uebertragung bemerkbar. Da sich beispielsweise bei einer Tunnelfunkanlage zehn oder mehr Zwischenverstärker an meist unzugänglichen Stellen längs der Signalleitung 13 verteilt befinden, ist eine Reparatur des Uebertragungssystems ohne vorherige Lokalisierung des fehlerhaften Zwischenverstärkers sehr mühsam. Daher werden die Zwischenverstärker V1, V2, V3 ... zentral überwacht und ihr Betriebszustand an zentraler Stelle angezeigt.

Fig. 2 zeigt die Blockschaltbilder der Kopfstation 1 und eines ausgewählten Zwischenverstärkers V1, mit denen das erfindungsgemässe Verfahren durchgeführt werden kann. Die Kopfstation 1 enthält einen Sender 3, der über die Signalleitung 13 mit dem Eingang einer Verstärkereinheit 4 im Zwischenverstärker V1 verbunden ist. Vom Ausgang dieser Verstärkereinheit 4 führt die Signalleitung 13 zum Eingang der nächsten, nicht eingezeichneten Verstärkereinheit im nachfolgenden Zwischenverstärker V2. Die Verstärkereinheit 4 wird, wie die Verstärkereinheiten der anderen Zwischenverstärker auch, aus einer Speiseeinheit 5 über eine Speiseleitung 14 mit dem notwendigen Betriebsstrom versorgt.

Innerhalb der Kopfstation 1 ist in der Speiseleitung 14 ein Antwortsignaldetektor 6 angeordnet, der auf die Antwortsignale aus den Zwischenverstärkern V1, V2, V3, ... anspricht und die detektierte Information über den Betriebszustand der Zwischenverstärker an eine Ueberwachungseinheit 7 weiterleitet. Die Ueberwachungseinheit 7 ist ihrerseits über eine Steuerleitung mit der Speiseeinheit 5 verbunden und leitet so durch eine gesteuerte Aenderung der Speisespannung einen Ueberwachungszyklus für die Zwischenverstärker ein. Der Doppelpfeil in der Speiseleitung 14 deutet an, dass über die Speiseleitung Signale sowohl von der Kopfstation 1 zu den Zwischenverstärkern V1, V2, V3, ... als auch in umgekehrter Richtung übertragen werden.

Sobald die Ueberwachungseinheit 7 in der Speiseeinheit 5 eine Aenderung der Speisespannung ausgelöst hat und damit den Beginn eines Ueberwachungszyklus signalisiert, wird diese Speisespannungsänderung in einem Synchronisiersignaldetektor 8 detektiert, der innerhalb des jeweiligen Zwischenverstärkers angeordnet ist. Der als Speisespannungsänderung übertragene Synchronisierimpuls wird in allen Zwischenverstärkern praktisch gleichzeitig wahrgenommen und leitet synchron in allen Zwischenverstärkern einen Ueberwachungszyklus ein, in dessen Verlauf Antwortsignale, die Informationen über den Betriebszustand enthalten, von den einzelnen Zwischenverstärkern an die Kopfstation 1 abgesetzt werden. Um eine eindeutige Zuordnung der Antwortsignale zu den aussendenden Zwischenverstärkern zu erhalten, werden die Antwortsignale vorteilhafterweise im Zeitmultiplex übertragen.

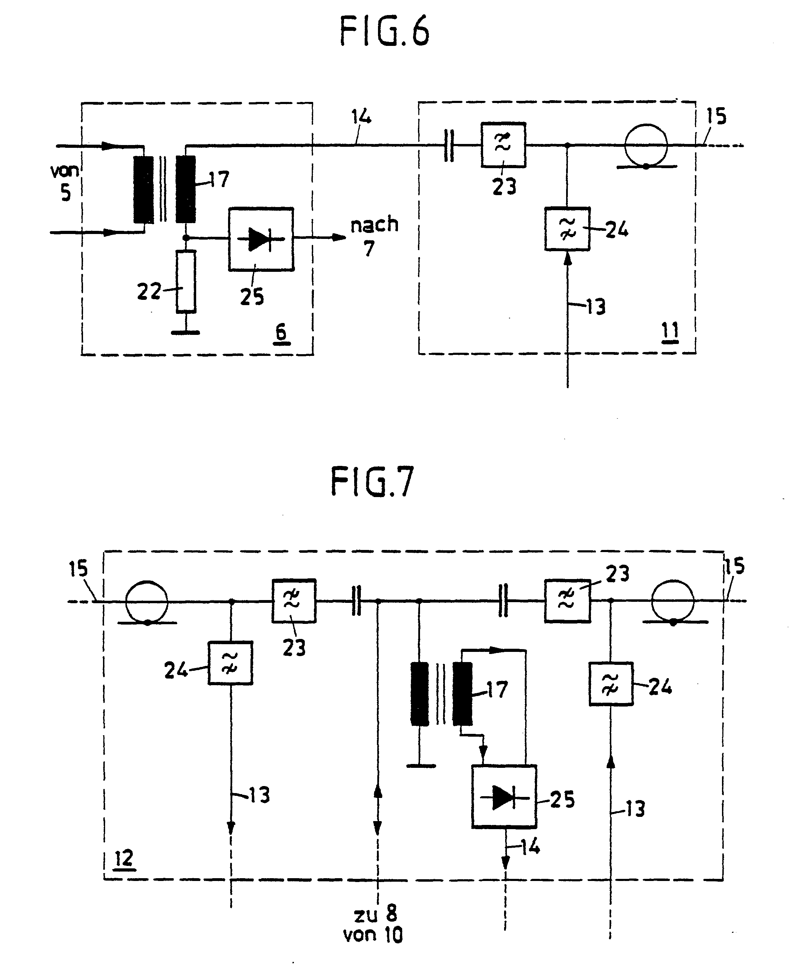

Eine für den Zeitmultiplex geeignete, mögliche zeitliche Zuordnung der verschiedenen Signale innerhalb eines Ueberwachungszyklus ist in Fig. 5 dargestellt. Die Länge eines Ueberwachungszyklus TZ ist durch den Zeitraum zwischen aufeinanderfolgenden Synchronisierbits SB festgelegt, die am Ausgang der Synchronisiersignaldetektoren 8 erscheinen und den Beginn des Ueberwachungszyklus TZ markieren. Innerhalb des Ueberwachungszyklus TZ ist eine Mehrzahl von nicht überlappenden Zeitschlitzen T1, T2, T3, ... vorgesehen, von denen je ein Zeitschlitz einem Zwischenverstärker zugeordnet ist. Die Zwischenverstärker V1, V2, V3, ... senden ihre Antwortsignale A1, A2, A3, ... in den zugehörigen Zeitschlitzen T1, T2, T3, ... aus. Der zeitliche Versatz zwischen den Zeitschlitzen T1, T2, T3, ... wird durch Uhren 9 gesteuert, die in den Zwischenverstärkern vorhanden sind und von dem Synchronisierbit SB des vorgeschalteten Synchronisiersignaldetektors 8 gestartet werden. Die Uhren 9 in den Zwischenverstärkern V1, V2, V3, ... sind alle gleich aufgebaut, um die Herstellung der Verstärker zu vereinfachen. Sie werden jeweils durch einen Ortscodestecker 21 programmiert, der für jeden Zwischenverstärker anders ist. Jede der Uhren 9 erzeugt daher eine eigene, unverwechselbare Verzögerungszeit, nach deren Ablauf ein nachgeschalteter Antwortsignalgeber 10 das Antwortsignal A1, A2, A3, ... des jeweiligen Zwischenverstärkers V1, V2, V3, ... über die Speiseleitung 14 an die Kopfstation 1 abgibt. Der Antwortsignalgeber 10 verarbeitet, wie aus Fig. 2 zu ersehen ist, Daten über den Betriebszustand der Verstärkereinheit 4, die an einem Datenausgang 20 abgenommen werden. Die Antwortsignale A1, A2, A3, ... bestehen beispielsweise aus einer Folge von je vier Informationsbits IB, in denen in codierter Form die Information über den Betriebszustand der zugeordneten Zwischenverstärker V1, V2, V3, ... enthalten ist.

In einer weiteren Ausgestaltung der Erfindung wird als Speiseleitung 14 und Signalleitung 13 eine gemeinsame Koaxialleitung 15 verwendet, über die sowohl die Signalübertragung, als auch die Speisung der Zwischenverstärker erfolgt. Die Koaxialleitung 15 kann im Falle des Tunnelfunks innerhalb des Tunnels als strahlendes Koaxialkabel ausgebildet sein, um eine drahtlose Verbindung mit einer im Tunnel befindlichen, mobilen Funkstation zu ermöglichen. Die Blockschaltbilder einer entsprechenden Anlage mit kombinierter Speise- und Signalleitung sind in Fig. 3 wiedergegeben. Der Versorgungsstrom für die Zwischenverstärker wird hier in der Kopfstation 1 über einen sendeseitigen Koppler 11 der Koaxialleitung 15 aufgeprägt. In den Zwischenverstärkern, für die stellvertretend der erste Zwischenverstärker V1 eingezeichnet ist, ist ein vergleichbarer Koppler 12 angeordnet, der die Speisung von den übertragenen Signalen trennt und beides getrennt auf die entsprechenden Eingänge der Verstärkereinheit 4 gibt, aber auch die verstärkten Signale vom Ausgang der Verstärkereinheit 4 wieder auf die Koaxialleitung 15 zum nachfolgenden Zwischenverstärker zurückgibt. Speiseeinheit 5, Ueberwachungseinheit 7, der Antwortsignaldetektor 6 in der Kopfstation 1 ebenso wie der Synchronisiersignaldetektor 8, die Uhr 9 und der Antwortsignalgeber 10 im Zwischenverstärker V1 erfüllen in dieser Anordnung dieselben Funktionen wie in dem System nach Fig. 2.

Vorteilhafterweise erfolgt die Versorgung der Zwischenverstärker V1, V2, V3, ... über eine Wechselstromspeisung mit einer sinusförmigen Speisespannung VS, die, wie in Fig. 5 angedeutet, eine Speisespannungsamplitude U aufweist und beispielsweise mit einer Frequenz von ungefähr 10 kHz auftritt. Die Aenderung der Speisespannung VS zur Einleitung des Ueberwachungszyklus TZ wird als kurzzeitiger Unterbruch in der Speisespannung VS ausgeführt, wobei das Aus- und Einschalten zur Vermeidung von zusätzlichen Oberwellen jeweils im Nulldurchgang der Wechselspannung erfolgt. Der Unterbruch wird dabei durch das Auslassen von beispielsweise 10 Perioden der Speisewechselspannung erzeugt, so dass sich bei der angenommenen Frequenz von 10 kHz eine Lücke von 1 ms Länge ergibt. Aus diesem Unterbruch der Speisespannung VS wird, wie bereits erwähnt, im Synchronisiersignaldetektor 8 das Synchronisierbit SB mit einer entsprechenden Pulsdauer abgeleitet.

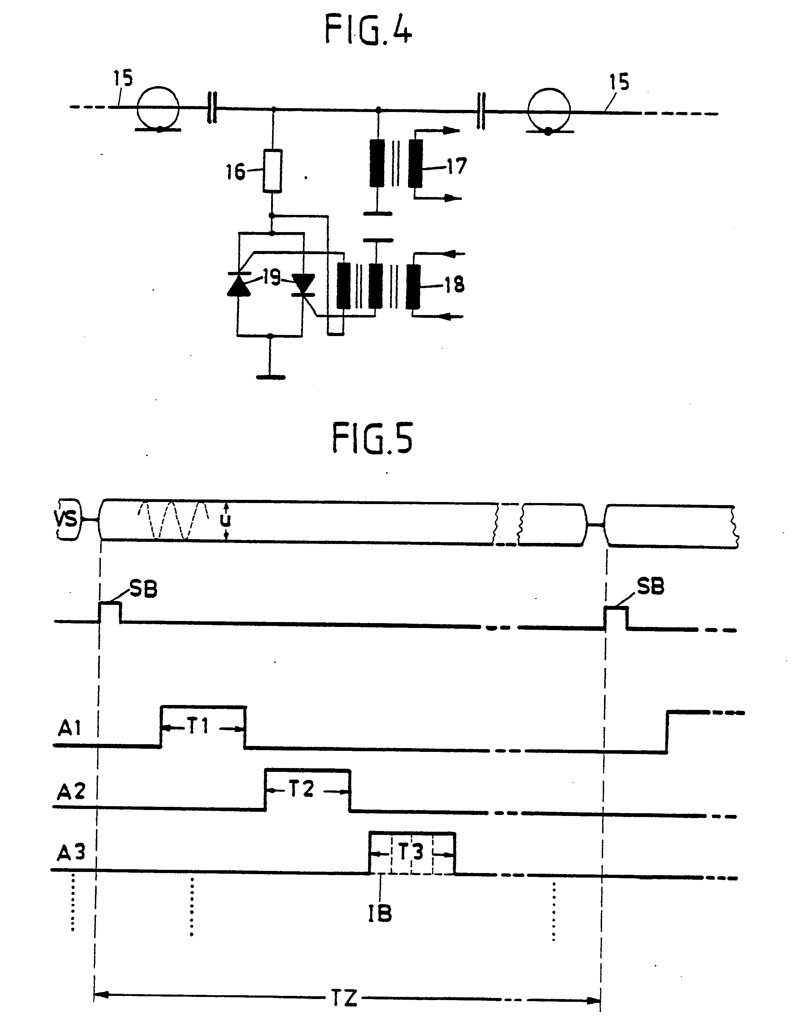

Wenn gemäss einer Weiterbildung der Erfindung die Antwortsignale A1, A2, A3, ... von den Zwischenverstärkern V1, V2, V3, ... mittels impulsförmiger Stromerhöhungen an die Ueberwachungseinheit 7 übertragen werden, werden auch die damit verbundenen Schaltvorgänge vorteilhafterweise in den Nulldurchgängen der Speisespannung VS durchgeführt. Eine für die Ausführung solcher impulsförmiger Stromerhöhungen geeignete und bevorzugte, prinzipielle Schaltung ist in Fig. 4 dargestellt. Während von der Koaxialleitung 15 über einen Speisetransformator 17 die für den jeweiligen Zwischenverstärker benötigte Speisespannung abgegriffen wird, ist der Koaxialleitung 15 und damit der Speisung ein Lastwiderstand 16 parallelgeschaltet, der über ein Paar antiparalleler Thyristoren 19 zu- und weggeschaltet werden kann. Die Zuschaltung erfolgt dabei zweckmässigerweise synchron zur Speisefrequenz mittels Zündimpulsen, die über einen Zündimpulsübertrager 18 auf die Steuerelektroden der Thyristoren 19 gegeben werden.

Die zeitliche Länge der Stromimpulse und damit der Informationsbits IB entspricht wiederum einem Vielfachen der Speisefrequenzperiode, also beispielsweise 10 ms. bei einer Speisefrequenz von 10 kHz. Bei den angenommenen vier Informationsbits IB pro Antwortsignal A1, A2, A3, ... liegt dann die Länge eines Ueberwachungszyklus TZ in der Grössenordnung von 1 bis 10 s. Um eine Ueberlappung der Zeitschlietze T1, T2, T3, ... mit Sicherheit zu vermeiden, erweist es sich als vorteilhaft, zwischen den Zeitschlitzen Zeitabstände vorzusehen, wie dies aus Fig. 5 ersichtlich ist.

Zur Auswertung der Stromimpulse in den Antwortsignalen A1, A2, A3, ... wird der Speisewechselstrom gemäss Fig. 6 im Antwortsignaldetektor 6 auf der Sekundärseite eines Speisetransformators 17 durch einen Messwiderstand 22 geschickt. Die an dem Messwiderstand 22 abfallende Wechselspannung, deren Amplitude ein Mass für den Speisestrom in den Zwischenverstärkern V1, V2, V3, ... ist, wird in an sich bekannter Weise durch Gleichrichter 25 gleichgerichtet und gemittelt. Die Stromerhöhungen, die sich durch das Parallelschalten des Lastwiderstandes 16 ergeben, führen zu einer Aenderung dieses Mittelwertes, die detektiert und dann in der Ueberwachungseinheit 7 ausgewertet werden kann.

Besonders günstig vom betriebstechnischen Standpunkt aus ist es, den Betriebszustand der Zwischenverstärker V1, V2, V3, ... fortlaufend zu überwachen. Zu diesem Zweck wird der Ueberwachungszyklus TZ periodisch wiederholt, in dem von der Ueberwachungseinheit 7 periodisch ein Synchronisiersignal in Form des beschriebenen Speisespannungsunterbruchs ausgesendet wird. Wenn dann in einer vorbestimmten Anzahl von aufeinanderfolgenden Ueberwachungszyklen TZ durch die Antwortsignale A1, A2, A3, ... jeweils ein Fehler in den Zwischenverstärker V1, V2, V3, ... signalisiert wird, wird von der Ueberwachungseinheit 7 ein Alarm ausgelöst und zentral angezeigt, so dass das Ueberwachungspersonal sofort einen Ueberblick über den vorliegenden Störungsfall erhält und entsprechende Gegenmassnahmen ergreifen kann.

Das die Signalübertragung vom Sender 3 zu einem Empfänger üblicherweise auf dem 2 m- und/oder 4 m-Band erfolgt, sind störende Einflüsse zwischen der Speisewechselspannung und den Ueberwachungssignalen einerseits und den Nachrichtensignalen andererseits auf der Koaxialleitung 15 weitgehend auszuschliessen. Die Trennung bzw. Ueberlagerung der beiden Frequenzbereiche in den Kopplern 11 und 12 erfolgt gemäss den Fig. 6 und 7 durch eine Mehrzahl von Tiefpassfiltern 23 und Hochpassfiltern 24, die einerseits in der Kopfstation 1 und auf der Ausgangsseite der Zwischenverstärker V1, V2, V3, ... die Signalleitung 13 und die Speiseleitung 14 zusammenkoppeln und auf der Eingangsseite der Zwischenverstärker V1, V2, V3, ... die Speisefrequenz und Informationsfrequenz voneinander separieren, so dass über den Speisetransformator 17 und einen Gleichrichter 25 die ungestörte Speisung der Verstärkereinheit 4 erfolgen kann.

Insgesamt ergibt sich so ein Ueberwachungsverfahren, das bei grösstmöglicher Einfachheit hinsichtlich der Installation eine hohe Störsicherheit aufweist und ohne zusätzliche Leitungen die zentrale Betriebsüberwachung einer Mehrzahl von verteilt angeordneten Zwischenverstärkern ermöglicht.

**Patentansprüche**

1. Verfahren zur Ueberwachung von Zwischenverstärkern (V1, V2, V3, ...), welche zum Ausgleich der Dämpfungsverluste längs einer Signalleitung (13) zwischen zwei Kopfstationen (1, 2) angeordnet sind und über eine gemeinsame Speiseleitung (14) mit einer Speisespannung (VS) versorgt werden, bei welchem Verfahren der Betriebszustand der Zwischenverstärker (V1, V2, V3, ...) von einer zentralen Ueberwachungseinheit (7) überwacht wird, und Informationen von der Ueberwachungseinheit (7) zu den Zwischenverstärkern (V1, V2, V3, ...) mittels einer Aenderung der Speisespannung (VS) und von den Zwischenverstärkern (V1, V2, V3, ...) zu der Ueberwachungseinheit (7) mittels impulsförmiger Erhöhungen des Speisestroms übertragen werden, dadurch gekennzeichnet, dass durch kurzzeitige Absenkung der Speisespannung (VS) ein Ueberwachungszyklus (TZ) eingeleitet wird und innerhalb des Ueberwachungszyklus (TZ) in zeitlicher Aufeinanderfolge Antwortsignale (A1, A2, A3, ...) von den Zwischenverstärkern (V1, V2, V3, ...) über die Speiseleitung (14) an die Ueberwachungseinheit (7) übertragen und dort ausgewertet werden, wobei die Antwortsignale (A1, A2, A3, ...) jeweils eine Folge von Informationsbits (IB) enthalten.

2. Verfahren nach Anspruch 1, dadurch gekennzeichnet, dass zugleich als Speiseleitung (14) und Signalleitung (13) eine gemeinsame Koaxialleitung (15) verwendet wird und die Versorgung der Zwischenverstärker (V1, V2, V3, ...) über eine Wechselstromspeisung erfolgt, und dass sowohl die Absenkung der Speisespannung (VS) zu Beginn des Ueberwachungszyklus (TZ), als auch die impulsförmigen Stromerhöhungen der Antwortsignale (A1, A2, A3, ...) in Nulldurchgängen der Speisewechselspannung geschaltet werden.

3. Verfahren nach Anspruch 2, dadurch gekennzeichnet, dass die Stromerhöhungen in den Zwischenverstärkern (V1, V2, V3, ...) durch das Parallelschalten eines Lastwiderstandes (16) in der Speisung erzeugt und zur Auswertung der Stromimpulse in der Ueberwachungseinheit (7) der Speisewechselstrom durch einen Messwiderstand (22) geschickt, die am Messwiderstand (22) abfallende Spannung gleichgerichtet und gemittelt und die Aenderungen des Mittelwertes detektiert und ausgewertet werden.

4. Verfahren nach Anspruch 1, dadurch gekennzeichnet, dass der Ueberwachungszyklus (TZ) eine der Anzahl der Zwischenverstärker (V1, V2, V3, ...) entsprechende Anzahl von Zeitschlitzen (T1, T2, T3, ...) aufweist, jedem Zwischenverstärker wenigstens ein Zeitschlitz zugeordnet ist und die Antwortsignale (A1, A2, A3, ...) der Zwischenverstärker (V1, V2, V3, ...) in den zugehörigen Zeitschlitzen (T1, T2, T3, ...) übertragen werden.

5. Verfahren nach Anspruch 4, dadurch gekennzeichnet, dass die Zeitschlitze (T1, T2, T3, ...) mittels Uhren (9) in den zugeordneten Zwischenverstärkern (V1, V2, V3, ...) festgelegt werden, dass aus dem Unterbruch der Speisespannung (VS) zu Beginn des Ueberwachungszyklus (TZ) ein Synchronisierbit (SB) abgeleitet wird, durch welches Synchronisierbit (SB) die Uhren (9) in den Zwischenverstärkern (V1, V2, V3, ...) gleichzeitig gestartet werden, und dass der Ueberwachungszyklus (TZ) periodisch wiederholt wird.

6. Verfahren nach Anspruch 5, dadurch gekennzeichnet, dass von der Ueberwachungseinheit (7) ein Alarm ausgelöst wird, wenn in einer vorbestimmten Anzahl von aufeinanderfolgenden Ueberwachungszyklen (TZ) durch die Antwortsignale (A1, A2, A3, ...) jeweils ein Fehler in den Zwischenverstärkern (V1, V2, V3, ...) signalisiert wird.

7. Vorrichtung zur Durchführung des Verfahrens gemäss Anspruch 1, dadurch gekennzeichnet, dass in der einen Kopfstation (1) die Ueberwachungseinheit (7) eine Speiseeinheit (5) steuert und in der Speiseleitung (14) von der Speiseeinheit (5) zu den Zwischenverstärkern (V1, V2, V3, ...) ein Antwortsignaldetektor (6) angeordnet und mit der Ueberwachungseinheit (7) verbunden ist, und dass in den Zwischenverstärkern (V1, V2, V3, ...) ein Antwortsignalgeber (10) vorgesehen ist, dessen Ausgang mit der Speiseleitung (14) und dessen einer Eingang mit einem Datenausgang (20) einer Verstärkereinheit (4) verbunden sind.

8. Vorrichtung nach Anspruch 7, dadurch gekennzeichnet, dass die Speiseleitung (14) und die Signalleitung (13) über Koppler (11, 12) ausserhalb der Kopfstationen (1, 2) und Zwischenverstärker (V1, V2, V3, ...) in einer Koaxialleitung (15) zusammengefasst sind.

9. Vorrichtung nach Anspruch 7, dadurch gekennzeichnet, dass in einem Zwischenverstärker (V1) jeweils ein Synchronisationsdetektor (8) und eine Uhr (9) vorgesehen sind und der Eingang des Synchronisationsdetektors (8) mit der Speiseleitung (14) verbunden ist und der Ausgang des Detektors über die Uhr (9) den Antwortsignalgeber (10) steuert.

## Claims

1. Method for monitoring intermediate repeaters (V1, V2, V3, ...) which, for compensating the attenuation losses along a signal line (13) are arranged between two terminal stations (1, 2) and are supplied with a supply voltage (VS) *via* a common supply line (14), in which method the operational state of the intermediate repeaters (V1, V2, V3, ...) is monitored by a central monitoring unit (7) and information is transmitted from the monitoring unit (7) to the intermediate repeaters (V1, V2, V3, ...) by means of a change in the supply voltage (VS) and from the intermediate repeaters (V1, V2, V3, ...) to the monitoring unit (7) by means of pulse-shaped increases in the supply current, characterized in that a monitoring cycle (TZ) is initiated by lowering the supply voltage (VS) for a short time and within the monitoring cycle (TZ) response signals (A1, A2, A3, ...) are transmitted consecutively in time from the intermediate repeaters (V1, V2, V3, ...) *via* the supply line (14) to the monitoring unit (7) and are there evaluated, the response signals (A1, A2, A3, ...) containing in each case a sequence of information peaks (IB).

2. Method according to Claim 1, characterized in that a common coaxial line (15) is simultaneously used as supply line (14) and signal line (13) and the intermediate repeaters (V1, V2, V3, ...) are supplied *via* an alternating-current supply system, and that both the lowering of the supply voltage (VS) at the beginning of the monitoring cycle (TZ) and the pulse-shaped increases in current of the response signals (A1, A2, A3, ...) are switched at zero transitions of the alternating supply voltage.

3. Method according to Claim 2, characterized in that the increases in current are generated in the intermediate repeaters (V1, V2, V3, ...) by connecting a load resistor (16) in parallel in the supply system and, for evaluating the current pulses in the monitoring unit (7), the alternating supply current is sent through a sensing resistor (22), the voltage drop across the sensing resistor (22) is rectified and averaged and the changes of the mean value are detected and evaluated.

4. Method according to Claim 1, characterized in that the monitoring cycle (TZ) has a number of time slots (T1, T2, T3, ...) corresponding to the number of intermediate repeaters (V1, V2, V3, ...), at least one time slot is allocated to each intermediate repeater and the response signals (A1, A2, A3, ...) of the intermediate repeaters (V1, V2, V3, ...) are transmitted in the associated time slots (T1, T2, T3, ...).

5. Method according to Claim 4, characterized in that the time slots (T1, T2, T3, ...) are defined by means of clocks (9) in the associated intermediate repeaters (V1, V2, V3, ...), that a synchronizing bit (SB) is derived from the interruption of the supply voltage (VS) at the beginning of the monitoring cycle (TZ), by means of which synchronizing bit (SB) the clocks (9) in the intermediate repeaters (V1, V2, V3, ...) are started at the same time and that the monitoring cycle (TZ) is periodically repeated.

6. Method according to Claim 5, characterized in that the monitoring unit (7) triggers an alarm if a fault in the intermediate repeaters (V1, V2, V3, ...) is signalled in each case by the response signals (A1, A2, A3, ...) in a predetermined number of successive monitoring cycles (TZ).

7. Device for carrying out the method according to Claim 1, characterized in that in one terminal station (1), the monitoring unit (7) controls a supply unit (5) and a response signal detector (6) is arranged in the supply line (14) from the supply unit (5) to the intermediate repeaters (V1, V2, V3, ...) and is connected to the monitoring unit (7), and that in the intermediate repeaters (V1, V2, V3, ...) a response signal transmitter (10) is provided, the output of which is connected to the supply line (14) and one input of which is connected to a data output (20) of an amplifier unit (4).

8. Device according to Claim 7, characterized in that the supply line (14) and the signal line (13) are combined in a coaxial line (15) *via* couplers (11, 12) outside the terminal stations (1, 2) and intermediate repeaters (V1, V2, V3, ...).

9. Device according to Claim 7, characterized in that a synchronization detector (8) and clock (9) are provided in each case in an intermediate repeater (V1) and the input of the synchronization detector (8) is connected to the supply line (14) and the output of the detector controls the response signal transmitter (10) *via* the clock (9).

## Revendications

1. Procédé pour la surveillance de répéteurs (V1, V2, V3, ...) qui, pour compenser les pertes par affaiblissement le long d'une ligne de signalisation (13), sont disposés entre deux postes de tête (1, 2) et sont alimentés par l'intermédiaire d'une ligne d'alimentation commune (14) au moyen d'une tension d'alimentation (VS), ce procédé étant destiné à surveiller l'état de fonctionnement des répéteurs (V1, V2, V3, ...) à partir d'une unité de surveillance centrale (7) et des informations étant transmises de l'unité de surveillance (7) aux répéteurs (V1, V2, V3, ...) au moyen d'une modification de la tension d'alimentation (VS) et des répéteurs (V1, V2, V3, ...) à l'unité de surveillance (7) au moyen de surintensités en forme d'impulsions du courant d'alimentation, caractérisé en ce que par une courte diminution de la tension d'alimentation (VS), un cycle de surveillance (TZ) est amorcé et, pendant le cycle de surveillance (TZ), des signaux de réponse (A1, A2, A3, ...) sont transmis les uns à la suite des autres dans le temps à partir des répéteurs (V1, V2, V3, ...), par l'intermédiaire de la ligne d'alimentation (14), à l'unité de surveillance (7) et y sont évalués, les signaux de réponse (A1, A2, A3, ...) comprenant chaque fois une succession de bits d'information (IB).

2. Procédé suivant la revendication 1, caractérisé en ce qu'une ligne coaxiale commune (15) est utilisée en même temps comme ligne d'alimentation (14) et comme ligne de signalisation (13) et l'alimentation des répéteurs (V1, V2, V3, ...) s'effectue par l'intermédiaire d'une alimentation de courant alternatif et que la diminution de la tension d'alimentation (VS) au début du cycle de surveillance (TZ), de même que les surintensités en forme d'impulsions des signaux de réponse (A1, A2, A3, ...) sont créées par commutation lors des passages par zéro de la tension alternative d'alimentation.

3. Procédé suivant la revendication 2, caractérisé en ce que les surintensités dans les répéteurs (V1, V2, V3, ...) sont produites par la connexion en parallèle d'une résistance de charge (16) dans l'alimentation et pour évaluer les impulsions de courant dans l'unité de surveillance (7), le courant alternatif d'alimentation est fourni par une résistance de mesure (22), la tension chutant au passage de la résistance de mesure (22) est redressée et sa valeur moyenne est calculée et les modifications de la valeur moyenne sont détectées et évaluées.

4. Procédé suivant la revendication 1, caractérisé en ce que le cycle de surveillance (TZ) présente un nombre de tranches de temps (T1, T2, T3, ...) correspondant au nombre des répéteurs (V1, V2, V3, ...), au moins une tranche de temps est attribuée à chaque répéteur et les signaux de réponse (A1, A2, A3, ...) sont transmis aux répéteurs (V1, V2, V3, ...) dans les tranches de temps (T1, T2, T3, ...) associées.

5. Procédé suivant la revendication 4, caractérisé en ce que les tranches de temps (T1, T2, T3, ...) sont fixées au moyen d'horloges (9) dans les répéteurs (V1, V2, V3, ...) associés, un bit de synchronisation (SB) est dérivé de l'interruption de la tension d'alimentation (VS) au début du cycle de surveillance (TZ), et ce bit de synchronisation (SB) provoque la mise en route simultanée des horloges (9) dans les répéteurs (V1, V2, V3, ...) et le cycle de surveillance (TZ) est périodiquement répété.

6. Procédé suivant la revendication 5, caractérisé en ce qu'une alarme est déclenchée par l'unité de surveillance 7 lorsque, dans un nombre prédéterminé de cycles de surveillance (TZ) successifs, une défaillance dans les répéteurs (V1, V2, V3, ...) est signalée chaque fois par les signaux de réponse (A1, A2, A3, ...).

7. Dispositif pour l'exécution du procédé suivant la revendication 1, caractérisé en ce que dans le premier poste de tête (1), l'unité de surveillance (7) pilote une unité d'alimentation (5) et dans la ligne d'alimentation (14) allant de l'unité d'alimentation (5) aux répéteurs (V1, V2, V3), un détecteur de signal de réponse (6) est disposé et est connecté à l'unité de surveillance (7), et dans les répéteurs (V1, V2, V3, ...) est prévu un générateur de signaux de réponse (10) dont la sortie est connectée à la ligne d'alimentation (14) et dont une entrée est connectée à une sortie de données (20) d'une unité d'amplification (4).

8. Dispositif suivant la revendication 7, caractérisé en ce que la ligne d'alimentation (14) et la ligne de signalisation (13) sont groupées, par l'intermédiaire de coupleurs (11, 12) extérieurs aux postes de tête (1, 2) et aux répéteurs (V1, V2, V3, ...) en une ligne coaxiale (15).

9. Dispositif suivant la revendication 7, caractérisé en ce que dans un répéteur (V1), un détecteur de synchronisation (8) et une horloge (9) sont chaque fois prévus et l'entrée du détecteur de synchronisation (8) est connectée à la ligne d'alimentation (14), tandis que la sortie du détecteur commande le générateur de signaux de réponse (10) par l'intermédiaire de l'horloge (9).

FIG.1

FIG.2

zu V2,V3,...,2

FIG.3

zu V2,V3,... ,2

# FIG.4

# FIG.5

# FIG.6

# FIG.7